# EUROPÄISCHE PATENTANMELDUNG

(11) **EP 0 692 191 A1**
(43) Veröffentlichungstag der Anmeldung: **17.01.1996**
(21) Anmeldenummer: 95902142.9
(22) Anmeldetag: 30.11.1994
(51) Int. Cl.: A01N 31/14, A01N 35/02, A01N 35/04, A01N 41/10, A01N 43/08

(54) **BEKAMPFUNG VON PFLANZENPARASITAREN NEMATODEN MIT PHENYLVERBINDUNGEN**

(30) Priorität: 02.12.1993 ES 9300253; 02.12.1993 ES 9300253
(71) Anmelder: UNIVERSIDAD DE LA LAGUNA, E-38071 La Laguna, Tenerife (ES)
(72) Erfinder: GONZALEZ PEREZ, José, Inst. Univ. de Bio-Orgánica, E-38206 La Laguna, Tenerife (ES); ESTEVEZ BRAUN, Ana, Inst. Univ. de Bio-Orgánica, E-38206 La Laguna, Tenerife (ES); GUTIERREZ RAVELO, A., Inst. Univ. de Bio-Orgánica, E-38206 La Laguna, Tenerife (ES); ESTEVEZ REYES, R., Inst. Univ. de Bio-Orgánica, E-38206 La Laguna, Tenerife (ES)
(74) Vertreter: Forstmeyer, Dietmar, Dr. rer. nat.
(86) Internationale Anmeldenummer: ES9400129
(87) Internationale Veröffentlichungsnummer: WO9515082

(57) **Zusammenfassung**

Die Erfindung betrifft die Verwendung von Phenylverbindungen zur Bekämpfung phytoparasitischer Nematoden. Es ist gefunden worden, daß Phenylverbindungen mit Substituenten, die eine mit einer oxidierten Funktion oder mit Schwefel konjugierte Vinyl-oder Acetylengruppe umfassen, eine potente nematicide Wirkung auf phytoparasitische Nematoden ausüben. Es ist eine Aufgabe der vorliegenden Erfindung, Substanzen zu definieren, die bisher nicht offenbart wurden und die zur Bekämpfung phytoparasitischer Nematoden verwendet werden können. Es ist eine weitere Aufgabe der Erfindung, neue Verwendungen von mono-und bi-substituierten Derivaten von Phenylverbindungen zu finden, die bisher noch nicht als Nematicide offenbart wurden. Diese Verwendungen werden durch den Stand der Technik nicht nahegelegt. Es ist die Aufgabe dieser Erfindung, die Phenylverbindungen in industriellem Maßstab anzuwenden, da sie durch einfache chemische Syntheseverfahren hergestellt werden können.

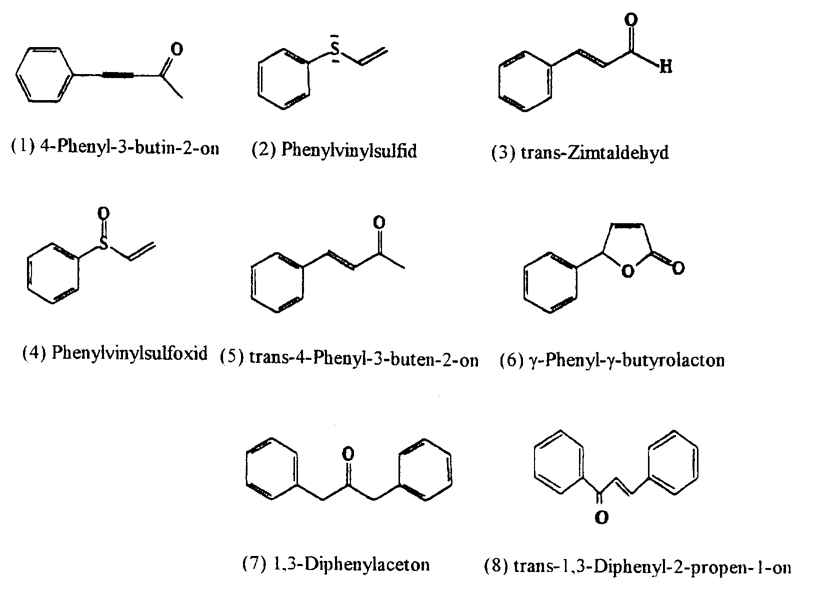

## Beschreibung

Die Erfindung betriffr die Verwendung von Phenylverbindungen mit Substituenten, welche eine Vinyl- oder Acetylengruppierung einschließen, die mit einer Sauerstoff-Funktion konjugiert sind oder die Schwefel enthalten, für die Bekämpfung der phytoparasitischen Nematoden. Die Erfindung betrifft die folgenden Verbindungen: 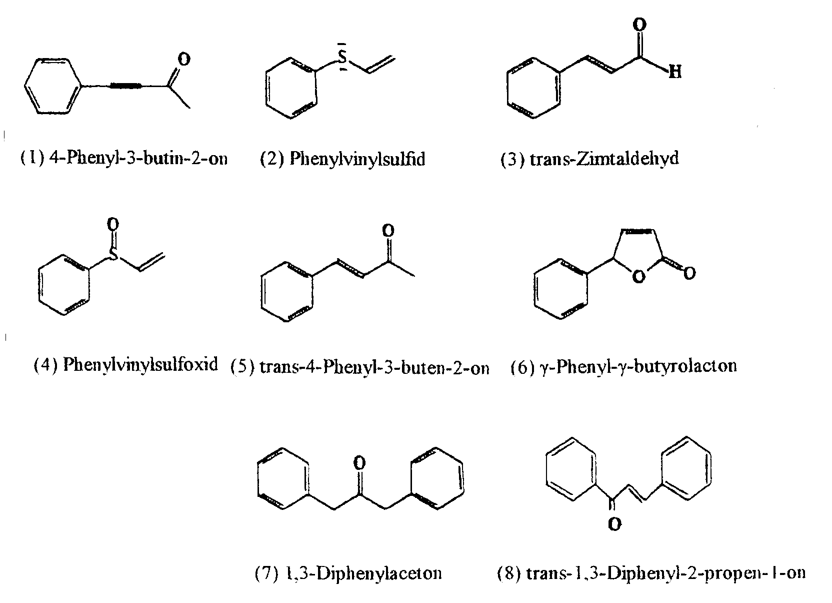
Beispielhaft und aus praktischer Sicht könnten die kommerziellen Rezepturen der Nematiziden, die Gegenstand des Patentes sind, mittels einfacher Prozesse im Labor synthetisiert werden: das Trans-1,3-Diphenyl-2-Propen-1-on kann man aus den Pflanzenextrakten erhalten, die sich prinzipiell bereits in natürlicher Form in den Pflanzen der Ordnungen finden, Oxalidaceas, Escrofulariaceas, Gesneriaceas, Acantaceas und Liliacea und kann im Laboratorium synthetisiert werden, unter anderem mittels Einsatzes von NAOH in einer alkoholischen Lösung aus Benzaldehyd und Acetophenon.

Wahrend der letzten 50 Jahre hat sich die chemische Bekämpfung der phytoparasitischen Nematoden in den Gebrauch von Produkten mit hoher Toxicität und geringer (biozidischer) Spezifität begründet, wie Kohlenwasserstoffe, die halogenisiert, organophosphoriert und carbamatisiert sind, die in höchstem Maße toxisch sind, einige mit neurotoxischer Aktivität. Die Anwendung dieser Verbindungen führt mittelfristig zu Problemen der Kontamination und der Umweltverschlechterung.

Ein gutes Nematizit muß eine hohe Spezifität haben. Ein Nematizit ist spezifisch, wenn es hochtoxisch für das Nematod ist (nematizitische Wirkung) aber nicht für andere Organismen und/oder wenn diese Substanz in der Lage ist, eine konkrete Phase des Lebenszyklus des Nematodes zu unterbrechen, seine Entwicklung zu verhindern (nematostatische Wirkung).

Man hat herausgefunden, daß das trans-1,3-Diphenyl-2-propen-1-on eine potente nematizide und nemastostatische Wirkung auf die phytoparasitischen Nematoden hat, das es nicht phytotoxisch in den, für die Bekämpfung der Nematoden eingesetzen Dosen ist und eine sehr niedrige akute Toxizität bei Mäusen hat (Bild I).

### Bild I: Toxizität des trans-1,3-Diphenyl-2-propen-1-on verglichen mit anderen Nematiziden.

| Substanz | Code R.T.E.C.S.* | DL50** |
|---|---|---|
| trans-1,3-Diphenyl-2-propen-1-on | FL6900000 | 1492*** |
| Aldicarb | UE2275000 | 0,3 |
| Carbofurano | FB9450000 | 2 |
| Dazomet | XI2800000 | 180 |
| Etoprofos | TE4025000 | 34 |
| Fenamifos | TB3675000 | 22,7 |
| Fonofos | TA5950000 | 3 |
| Oxamilo | RP2300000 | 2,3 |

| | | |
|---|---|---|
| *: Registry of Toxic Effects of Chemical Substances, US Public Health Service | | |
| **: mg/Kg | | |
| ***: Von uns ermittelt (Beispiel 3) | | |

Diese Verbindungen sind in Dimethylsulfoxid, Ether, Kohlenstoffdisulfid, Benzol und Alkoholen löslich. Andere mögliche Lösungsmittel können durch ein spezielle Technik bestimmt werden. Für die Anwendungen, die einen hohen Grad an Spezifiktation erfordern, d.h. ein hohes Niveau an Vorhersagbarkeit der erwarteten Antwort unter den Nematoden und anderen Organismen, ist es normalerweise wünschenswert, die Rezepturen aus reinen Verbindungen oder fast reinen Verbindungen herzustellen.

Aufgrund der erhöhten nematizidischen Wirkung der Phenylverbindungen und Substituenten, die immer eine Vinyl- oder Acetylengruppierung einschließen, die mit einer sauerstoff-oder schwefelgesättigten Funktion konjugiert ist, müssen diese einer Trägersubstanz oder einem inerten Vehikel eingesetzt werden, das agronomisch akzeptabel ist. Beispiele von Trägersubstanzen, die eingesetzt werden könnten, sind Alkohole, Aceton, Chloroform, wässrige Lösungen mit 1% Dimethylsulfoxid und wässrige Lösungen mit Tensiden. Abhängig von der Art des Bodens, der Art der Vegitation, der Spezies an Nematoden, der Anwendungsart und der gewünschten Art der Antwort kann die Konzentration dieser Produkte in ihrer letztendlichen Zusammenstellung erheblich variieren, aber sollte typischerweise zumindest 0,00001% (0,1 ppm) betragen. Faktoren, wie beispielsweise die Phytotoxizität auf die behandelte Pflanze und die Toleranz anderer Spezien, die von diesen Substanzen beeinflußt werden können, können durch einen spezialisierten Techniker bestimmt werden, der das maximale Niveau des Produktes in der letztendlichen Zusammenstellung des Präparates bestimmt. Beispielhaft haben einige dieser Substanzen eine geringe Toxizität (1. 56 mg/kg intravenös hat keinen toxischen Effekt auf eine Ratte; 5. zeigt eine LD50 bei einer Ratte mit 112 mg/kg intravenös und 1210 mg/kg intraperitoneal).

Abhängig von der Spezie der Nematoden, der Konzentration, der Form und des Momentes der Anwendung, wirken diese Verbindungen kontrollierend auf die Nematoden, mittels Induktion von Tod oder Verhinderung der Bildung von Einschlußkörpern. Auf diese Weise kann die aktive Verabreichungsmenge effektiv sein und bestimmt sich mittels routinemäßiger Proben. Das finale Resultat ist der Tod oder die Verhinderung der Bildung von Einschlußkörpern der Nematoden. Es sind sodann Experimente zur Bestimmung der effektiven Menge des Produktes zu realisieren, die sich so bestimmt, wie diejenige, die eine Mortalität oder eine deutlich größere Reduktion der Bildung von Einschlußkörpern bewirkt, als diejenige, die bei einer Gruppe ohne Behandlung zu beobachten ist. Die effektive Menge des Produktes kann mit der Spezie der Nematoden, dem Stadium der Entwicklung, der Form des Substrates, dem Zeitraum der Behandlung, dem eingesetzten Träger oder Vehikel und mit anderen damit in Verbindung stehenden Faktoren variieren.

Damit sie effektiv sein können, müssen die Produkte in der Umgebung der zu kontrollierenden Nematoden eingesetzt werden. Die Präparate, die diese Produkte enthalten, können direkt an den Blättern eingesetzt werden, durch systematisches Einfügen in die Pflanze, mit direkter Berieselung der Parasiten oder des Substrates, von dem angenommen wird, das es in Kontakt mit dem Parasit stehen könnte.

Diese Produkte sind effektiv bei der Bekämpfung von phytoparasitischen Nematoden. Ohne den Wirkungsbereich des Patentes einschränken zu wollen, haben wir herausgefunden, das die phytoparasitischen Nematoden Glbodera pallida und G. rostochiensis, die Kartoffelzysten bilden und die Galaapfel-Nematoden Meloydogyne javanica, anfällig für das trans-1,3-Diphenyl-2-propen-1-on sind.

Die folgenden Beispiele haben zum Ziel, die Erfindung darzustellen, ohne eine Einschränkung der Möglichkeiten der Erfindung, wie sie durch die Ansprüche bestimmt werden.

### BEISPIEL 1

Nematizitidische Wirkung der Phenylverbindungen mit Substituenten, die eine Phenyl-oder Acetylengruppierung einschließen, welche mit einer sauerstoff- oder schwefelgestättigten Funktion konjugiert ist.

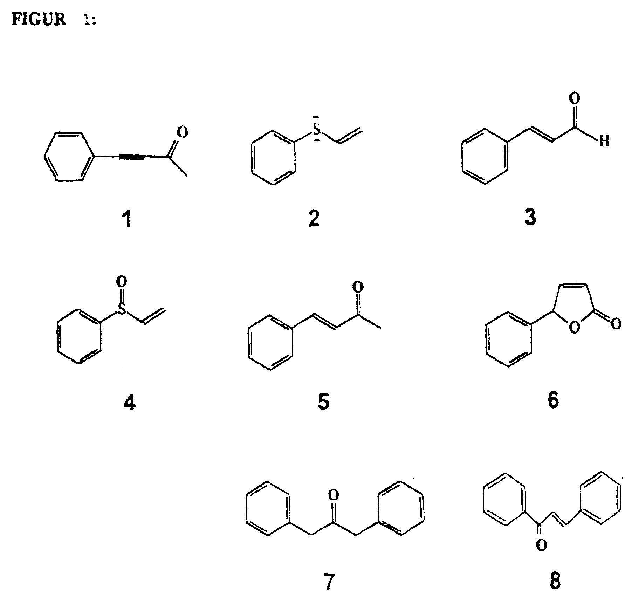

Man berechnet die letale Konzentration fünfzig (CL50: Konzentration, die notwendig ist, um den Tod von 50% der Nematoden innerhalb von 24 Stunden zu bewirken) der Phenylverbindungen mit Substituenten, die eine Vinyl- oder Acetylengruppierung einschließen, welche mit einer sauerstoff- oder schwefelgesättigten Funktion konjugiert ist (Figur 1). Man benutzte junge, im zweiten Stadium, die sich mittels Untertauchen der Zysten einer gemischten Population der Spezien Globodera rostochinesis und Globodera pallida in einer Lösung von 10 mmol von ZnSO4 befanden, welche die Bildung von Einschlußkörpern der in den Zysten enthaltenen Eiern induziert. Man setzte 25 bis 50 Junge auf Straßen mit variablen Konzentrationen der Probeverbindung (0,01, 0,1, 1, 10 mmol), wobei, wenn die Verbindung in Wasser wenig löslich war, die tatsächliche Konzentration mittels UV Spektrometrie geschätzt wurde.

Für jedes Experiment ordnet man vier gleiche mit den adäquaten Bekämpfungen (Wasser + Lösung) an. Nach 24 Stunden zählt man die toten Jungen und man korrigierte die Todesfälle in der Bekämpfung mittels der Formel nach Abbott (J. Econ. Entomol., 18:265 (1925)).

Die Daten unterwarf man einer Regressionsanalyse, welche die Angleichung der Kurve berechnet, die die Resultate des Experimentes besser erklärt. Ausgehend von dieser Kurve berechnet man die theoretische letale Konzentration 50 derjenigen Verbindungen für die phytoparasitischen Nematoden. Daraufhin macht man eine Aproximation der letalen Konzentration einhundert (CL100: Konzentration des notwendigen Produktes, um den Tod von 100% der Nematoden innerhalb von 24 Stunden zu bewirken) (Bild II.).

### Bild II:

Die letalen Konzentrationen der Phenylverbindungen mit Substituenten, die eine Vinyl-oder Acetylengruppierung einschließen, welche mittels einer sauerstoff- oder schwefelgesättigten Funktion konjugiert sind.

| VERBINDUNG | CL50 | | CL100 | |
|---|---|---|---|---|
| | mM | ppm | mM | ppm |
| 1 | 0,0037 | 0,53 | <0,05 | <7,21 |
| 2 | 0,021 | 2,86 | 1a0,6 | 136,22-88,73 |
| 3 | 0,024 | 3,17 | <1 | <132,16 |
| 4 | 0,111 | 16,90 | <1 | <152,22 |
| 5 | 0,168 | 24,56 | <1 | <146,19 |
| 6 | 0,282 | 45,74 | <1 | <162,19 |
| 7 | 0,961 | 202,08 | 2a1,5 | 420,56-315,42 |
| 8 | 0,033 | 6,86 | <0,05 | <10,4 |

### 1.2. Feldwirkung in einer Bananenplantage (Musa acuminata) konfrontiert mit Meloidogyne javanica.

Man bereitete 3000 Liter einer Lösung von trans-1,3-Diphenyl-2-propen-1-on 0,05 mmol und verwendete diese am Boden mit dem Wasser der Bewässerung in einem Gewächshaus der Bananenanpflanzung, das von dem phytoparasitischen Nematoden Meloidogyne javanica befallen war. Drei Tage später nahm man Proben des Bodens der behandelten Parzelle und stellte fest, das in den Extraktionen von Nematoden mittels der Methode der Zentrifugation auf Zucker (Extraktion von sowohl lebenden und toten Nematoden) lediglich 25% lebende Larven der M. javanica zu finden waren, sodaß die Behandlung mit trans-1,3-Diphenyl-2-propen-1-on eine Näherungsweiseeffektivität von 75% hatte.

### 1.3. Index des Befalls von Tomaten

Man pflanzte Tomatenpflanzen in einer kommerziell erhältlichen Auswahl, anfällig für M. javanica, um die Pflanzen der Bananenpflanzung, die mit trans-1,3-Diphenyl-2-propen-1-on des Experimentes 1.2 behandelt wurde, wie auch um solche, die nicht behandelt wurden. Der Index des Befalles der Wurzeln der Tomate gab uns eine näherungsweise Vorstellung des Niveaus der Infektion mit Nematoden der Wurzelknoten im Feld (Bridge & Page, 1980. Tropical Pest Management, 26:296-298). Zur Klassifikation der angegriffe der Nematoden auf die Wurzeln der Tomate etablierte man einen Index des Befalles von 0 bis 5. Die Pflanzen, die in dem mit trans-1,3-Diphenyl-2-propen-1-on behandeltem Boden wuchsen, erhielten einen mittleren Befallindex (ima) der deutlich kleiner war (ima=3) als derjenige der Pflanzen, die im Boden ohne Behandlung (ima=4,33) wuchsen.

### BEISPIEL 2

### Nemostatische Wirkung von trans-1,3-Diphenyl-2-propen-1-on.

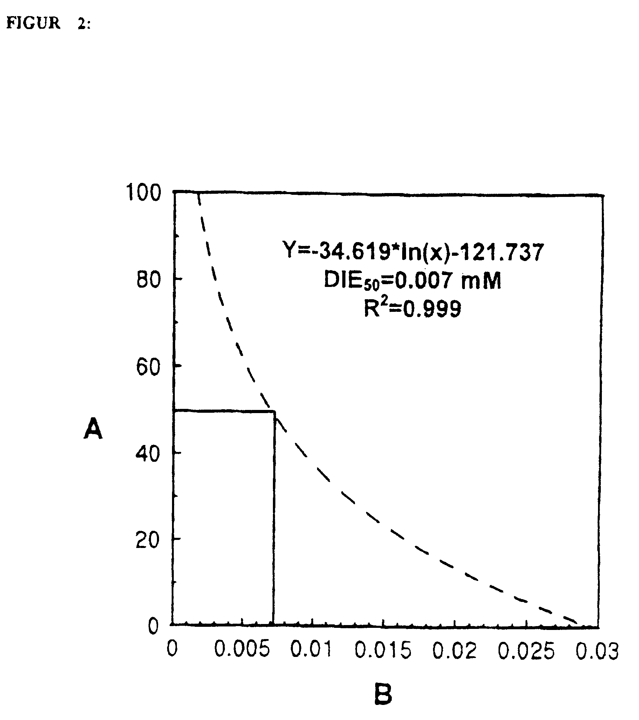

Man realisierte ein Experiment, um den Effekt von trans-1,3-Diphenyl-2-propen-1-on bei der Bildung von Einschlußkörpern der Globodera spp. zu sehen. Man setzte 10 Zysten einer gemischten Population der Spezie Globodera rostochienensis und Globodera pallida in Violen mit 2cc einer Lösung, die 10 mmol ZnSO4 als Induktionsmittel der Bildung von Einschlußkörpern enthielt, und eine variable Konzentration von trans-1,3-Diphenyl-2-propen-1-on (0,05, 0,04, 0,03, 0,01 und 0,005 mmol). Die in den vier Replikatoren und in den Bekämpfungen entwickelten Jungen zählte man periodisch während 15 Tagen. Auf der Basis der Regressionskurve, die die Resultate des Experimentes besser beschreibt, schätzte man, was die Anwesenheit von nur 0,007 mmol von trans-1,3-Diphenyl-2-propen-1-on während 15 Tagen ausreichend war, um die Bildung von Einschlußkörpern auf die Hälfte derjenigen der Bekämpfung zu reduzieren. Bei Konzentrationen von 0,03 mmol von trans-1,3-Diphenyl-2-propen-1-on und mehr, hörte die Bildung von Einschlußkörpern völlig auf (Figur 2).

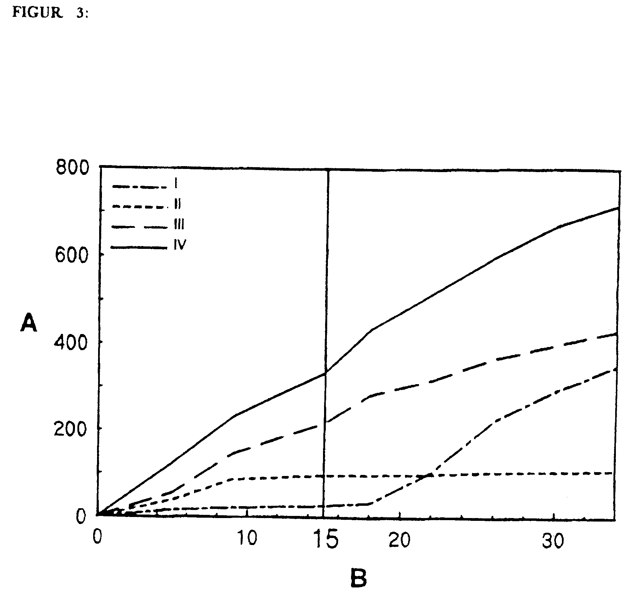

Nachfolgend und mit dem Ziel zu sehen, ob die Hinderung der Bildung von Einschlußkörpern irreversibel sei, entfernt man die Zysten, wäscht man mit destilliertem Wasser und setzt sie in neue Violen mit 2cc einer Lösung, die lediglich das Induktionsmittel der Bildung von Einschlußkörpern (10 mmol ZnSO4) enthielt. Man fand heraus, das der Bildung von Einschlußkörpern hindernde Effekt des trans-1,3-Diphenyl-2-propen-1-on bei einer Dosis über 0,03 mmol unumkehrbar ist. Die bei der Dosis von 0,01 mmol auftretende Bildung von Einschlußkörpern war deutlich geringer als die der Bekämpfung (37,28%) in den ersten 15 Tagen und praktisch null ( es entwickelten sich lediglich 4,6% im Verhältnis zur Bekämpfung) nach der Herausnahme des trans-1,3-Diphenyl-2-propen-1-on bei 15 Tagen seit Beginn des Experimentes (Figur 3).

### BEISPIEL 3

### Toxizität von trans-1,3-Diphenyl-2-propen-1-on bei einer Albino-Swiss Maus.

Man studierte die Toxizität bei einer männlichen ,,Albino-Swiss" Maus mittels der intraperitonealen (i.p.) Anwendung variabler Dosen von trans-1,3-Diphenyl-2-propen-1-on bei 10 Ratten zur Behandlung. Man wertete die Nummer der toten Tiere nach 24 Stunden der Anwendung und berechnete die Gleichung der Regressionskurve, die die Resultate des Experimentes besser beschreibt. Ausgehend von den Regressionsgleichungen schätzte man dieDL50 und DL0 (Dosen des trans-1,3-Diphenyl-2-propen-1-on ohne offensichtlichen Effekt) bei 24 Stunden. Ebenso schätzte man das Potential der Toxizität (pT) (Luckey und Venugopal, 1977. J. Toxicol. & Envirn. Health. 2:633.)

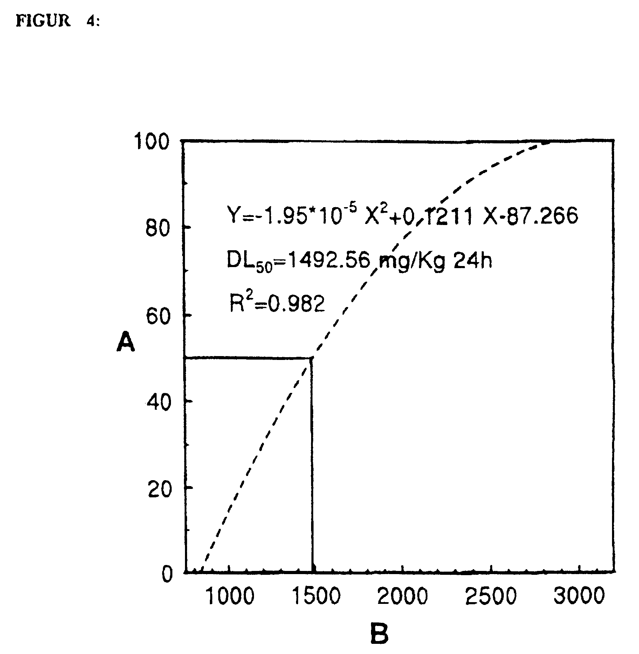

Das DL50 schätzte man bei 1494 mg/Kg bei 24 Stunden (Figur 4). Ausgehend von diesen Daten deduzierte man das das trans-1,3-Diphenyl-2-propen-1-on eine leicht toxische Substanz ist mit DL50 schwankend zwischen 0,5 und 5 g/kg (Loomis, 1982. Ed acribia. Zaragoza, 33-43). Der letale Effekt null für trans-1,3-Diphenyl-2-propen-1-on bei 24 Stunden war DL0=653,85 mg/kg.

Das toxische Potential schätzte man auf pT50=2,14. Nach der Toxizitätsskala nach Repeto (Repeto, M., 1981. Ed. Cientifico Medica, Barcelona, 28), ist das trans-1,3-Diphenyl-2-prpen-1-on eine Substanz mit sehr geringem toxischen Potential, wobei sie sich zwischen pantotenischer Säure (pT50=2,39) und CdCl2 (pT50=2,13) befindet, wobei sie sich in dieser Skala weitgehend im toxischen Potential des CINa (pT50=1,35) nähert.

### BEISPIEL 4

### Phytotoxizität, Versuch mit Artemia salina ,,Brine shrim Assay".

Die Analyse der Toxizität einer Substanz auf eine Salzgarnele Artemia salina (Brine shrimp) vermitteln eine angenäherte Vorstellung der biologischen Aktivität eines Produktes und insbesondere seiner Zytotoxizität.

Das Experiment wurde durchgeführt nach der Methode, die durch Mayer et al., 1982, beschrieben wurde ( Planta Med. 45:31-34), wobei das CL50 bei 24 Stunden für die Garnelen berechnet wird. Man benutzte vier Replikatoren, jeweils mit einer der Konzentrationen von trans-1,3-Diphenyl-2-propen-1-on (0,1, 0,01, 0,001 und 0,0001 mmol) und adäquate Bekämpfungen. Das geschätzte CL50 lag bei 0,0247 mmol, Dosen, die annäherungsweise mit denjenigen übereinstimmen, die für die Larven des zweiten Stadiums der Nematoden der Zyste berechnet wurden (CL50=0,033).

### BEISPIEL 5

### Phytotoxizität von trans-1,3-Diphenyl-2-propen-1-on.

### 5.1. Wirkung auf die Keimung von Kresse und Tomate

Man studierte die Wirkung von trans-1,3-Diphenyl-2-propen-1-on auf die Keimung und Verlängerung der Samen der Tomate (Lycopersicum esculentum var. marglobe) und Kresse (Nasturtium officinale).

Für die Tomate verteilte man 10 Samen über ein Filterpapier, was mit einer Lösung von trans-1,3-Diphenyl-2-propen-1-on oder mit Bekämpfung (Wasser + Lösungsmittel) imprägniert war, auf Petri-Schalen in einem Keimer bei 28°C. Bei der Kresse tat man gleicherweise 10 Samen in Violen mit 5 ml der Lösung aus trans-1,3-Diphenyl-2-propen-1-on oder Bekämpfung und führte das Experiment in einem Keimer bei 25°C durch. Man ordnete vier Replikatoren zur Behandlung (0,05 & 0,5 mmol) und Bekämpfungen an. Nach sieben Tagen registrierte man den Prozentsatz an gekeimten Samen und die Länge der Hypocotilen, die aus der Tomate herausragten und die Länge der primären Wurzel, die von der Kresse ausging.

Die Rate der Keimung (Prozentsatz der Keimung bzgl. der Bekämpfung) variierte bei der Tomate nicht, während man bei der Kresse eine leichte Verminderung der Keimung bei einer Dosis des trans-1,3-Diphenyl-2-propen-1-on von 0,5 mmol feststellte. Die Verlängerungsrate (Prozentsatz der Verlängerung bzgl. der Bekämpfung) variierte bei der Tomate nicht signifikant, während man bei der Kresse eine deutliche Verminderung der primären Wurzel bei einer Dosis von 0,5 mmol fesstellte (Bild 3).

### Bild III:

Rate der Keimung und Verlängerung der Samen von Kresse und Tomate bei Anwesenheit unterschiedlicher Konzentrationen von trans-1,3-Diphenyl-2-propen-1-on.

| [trans-1,3-Diphenyl-2-propen-1-on] (mmol) | TOMATE | | KRESSE | |
|---|---|---|---|---|
| | TG | TE | TG | TE |
| 0,05 | 102,77 | 104,9 | 78,38 | 97,87 |
| 0,5 | 100 | 89,15 | 86,49 | 18,36 |
| TG: Rate der Keimung; TE: Rate der Verlängerung | | | | |

Man wählte eine wachstums- und keimungshemmende Wirkung der Samen bei einer Dosis fest, die deutlich oberhalb der aktiven Dosen lag, beispielsweise nematizidisch (<0,05 mmol) oder nematostatisch (<0,03 mmol).

### 5.2. Wirkung auf die Entwicklung der Pflanzen

Die Phytotoxizität der trans-1,3-Diphenyl-2-propen-1-on studierte man im Laboratorium unter Benutzung von Vinca major Pflanzen (8 Pflanzen), Adiantum capillus-veneris (2 Pflanzen), Begonia rex (2 Pflanzen) und Hedera helix (2 Pflanzen), die man an Ort und Stelle zog und in einer Kammer bei 25°C, 80% relativer Luftfeuchtigkeit und 13 Stunden Licht pro Tag kultivierte. Die Hälfte der Pflanzen behandelte man mit einer Dosis von trans-1,3-Diphenyl-2-propen-1-on von 0,05 mmol, das man auf eine Bewässerung mit Feldkapazität anwendete. Man verfolgt die Entwicklung der Pflanzen während 50 Tagen, wobei man keine Unterschiede im Wachstum oder im allgemeinen Aspekt zwischen den behandelten und nicht behandelten Pflanzen feststellte.

Man studierte gleitherweise die Phytotoxizität von trans-1,3-Diphenyl-2-propan-1-on auf Pflanzen der Bananenpflanzung (Musa spp. cv Cavendish ,,Gran enano"). Bananenpflanzungen, die drei Monate alt waren und aus einer Kultivierung in vitro stammten, pflanzte man in Holzkübel von 5 l Kapazität mit einem Substrat von 1:1:1 (Torf:Sand:Kies) und ordnete diese zufällig in einem Gewächshaus an. Für dieses Experiment ordnete man 10 Replikatoren zur Behandlung und 5 zur Bekämpfung an. Man stellte keinen Effekt des trans-1,3-Diphenyl-2-propen-1-on nach 3 Monaten der Anwendung in Konzentrationen von 0,05 und 0,5 mmol mit dem Wasser der Bewässerung bei Feldkapazität fest. Ebensowenig stellt man einen Effekt nach 6 Monaten der Anwendung des trans-1,3-Diphenyl-2-propen-1-on auf die behandelten Pflanzen der Bananenpflanzung im Gewächshaus des Beispieles 1.2 fest.

### BESCHREIBUNG DER FIGUREN

Figur 1: Phenylverbindung mit Substituenten, die eine Vinyl- oder Acetylengruppierung einschließen, welche mit einer sauerstoff- oder schwefelgesättigten Funktion konjugiert ist und die eine nematizidische oder Bildung von Einschlußkörpern verhindernde Wirkung auf phytoparasitische Nematoden hat. (1) 4-Phenyl-3-butin-2-on; (2) Phenylvinylsulfid; (3) trans-Zimtaldehyd; (4) Phenylvinylsulfoxid; (5) trans-4-Phenyl-3-buten-2-on; (6) γ-Phenyl-γ-butirolacton; (7) 1,3-Diphenylaceton; (8) trans-1,3-diphenyl-2-propen-1-on.
Figur 2: Bildung von Einschlußkörpern hemmende Dosis 50 von trans-1,3-Diphenyl-2-propen-1-on auf Junge von Globodera spp, die dem Produkt während 15 Tagen ausgesetzt sind. (A) Prozentsatz der entwickelten Jungen; (B) Konzentration des trans-1,3-Diphenyl-2-propen-1-on; (DIE50) Bildung von Einschlußkörpern hemmende Dosis 50.
Figur 3: Wirkung unterschiedlicher Konzentrationen von trans-1,3-Diphenyl-2-propen-1-on während der Bildung von Einschlußkörpern von Globodera spp. Am 15. Tag werden die Behandlungen und Bekämpfungen durch die künstliche Bildung von Einschlußkörpern mittels ZnSO4 ersetzt. (A) Entwickelte Junge; (B) Zeit in Tagen; (I) Kontrollwasser; (II) Behandlung trans-1,3-Diphenyl-2-propen-1-on 0,01 mmol; (III) Behandlung trans-1,3-Diphenyl-2-propen-1-on 0,05 mmol; (IV) Bekämpfung ZnSO4 10 mmol.
Figur 4: Letale Dosis 50 auf Mäuse bei 24 Stunden intraperetonealer Anwendung von trans-1,3-Diphenyl-2-propen-1-on. (A) Prozentsatz der toten Mäuse; (B) Konzentration von trans-1,3-Diphenyl-2-propen-1-on in mg/kg; (DL50) letale Dosis 50 bei 24 Stunden Anwendung der Behandlung.

## Patentansprüche

1. Verfahren zur Bekämpfung phytoparasitischer Nematoden, umfassend das die direkte Anwendung auf diese oder auf das Substrat, von dem man annimmt, daß es mit ihnen in Kontakt tritt, mit einer effektiven Menge einer oder mehrerer Verbindungen der strukturellen Formel:

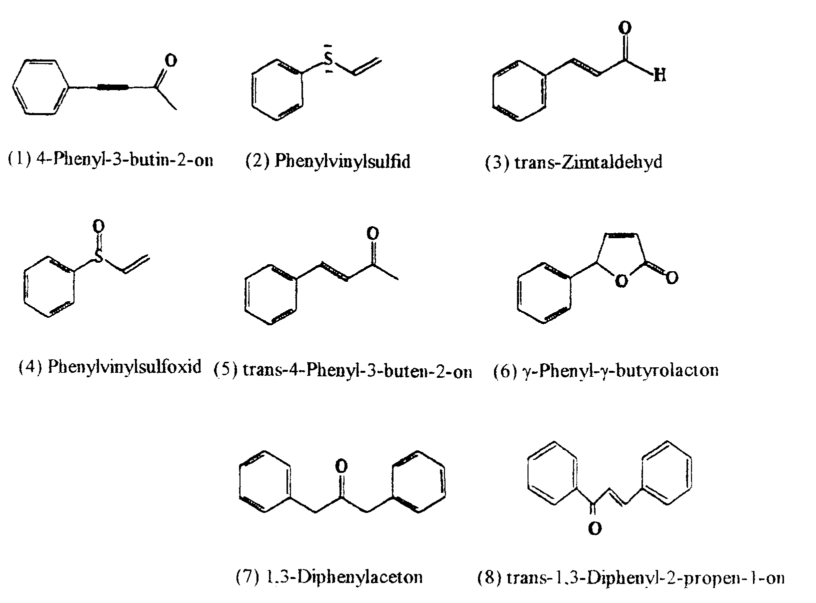

2. Verfahren nach Anspruch 1, wobei die Verbindung 4-Phenyl-3-butin-2-on ist.

3. Verfahren nach Anspruch 1, wobei die Verbindung Phenylvinylsulfid ist.

4. Verfahren nach Anspruch 1, wobei die Verbindung trans-Zimtaldehyd ist.

5. Verfahren nach Anspruch 1, wobei die Verbindung Phenylvinylsulfoxid ist.

6. Verfahren nach Anspruch 1, wobei die Verbindung trans-4-Phenyl-3-buten-2-on ist.

7. Verfahren nach Anspruch 1, wobei die Verbindung γ-Phenyl-γ-butyrolacton ist.

8. Verfahren nach Anspruch 1, wobei die Verbindung 1, 3-Diphenylaceton ist.

9. Verfahren nach Anspruch 1, wobei die Verbindung trans-1,3-Diphenyl-2-propen-1-on ist.

10. Verfahren nach Anspruch 1, wobei es sich bei dem Befall um phytoparasitische Nematoden handelt.

11. Verfahren nach Anspruch 1, wobei die obigen Verbindungen einen Teil einer Mischung von Substanzen bildet.

12. Verfahren nach Anspruch 1, wobei die obengenannten Produkte in Verbindung mit einer geeigneten Träger- oder Vehikelsubstanz auf das Substrat angewendet werden.
